# FASCICULE DE BREVET EUROPEEN

(11) **EP 2 353 943 B1**
(45) Date de publication et mention de la délivrance du brevet: **24.07.2013**
(21) Numéro de dépôt: 11305053.8
(22) Date de dépôt: 19.01.2011
(51) Int. Cl.: B60R 19/16

(54) **Dispositif de butée de véhicule automobile**
Anschlagvorrichtung für Kraftfahrzeug
Stop device for an automobile

(30) Priorité: 09.02.2010 FR 1050885
(43) Date de publication de la demande: 10.08.2011
(73) Titulaire: LECAPITAINE, 50000 Saint Lo (FR)
(72) Inventeur: Endelin, Claude, 50570, MARIGNY (FR); Lesellier, Fabien, 50420, Le Mesnil Raoult (FR)
(74) Mandataire: Jacobson, Claude

(56) Documents cités:
- EP-A1- 1 612 126
- EP-A1- 1 792 785
- DE-B3- 10 358 041
- US-A- 5 004 394

## Description

La présente invention concerne un dispositif de butée de véhicule automobile, du type décrit dans le préambule de la revendication 1.

Elle vise notamment, lors d'un accostage du véhicule automobile avec son extrémité arrière contre une surface verticale d'un quai de chargement, à amortir les efforts exercés sur le châssis et à faciliter l'accostage du véhicule contre le quai.

Le document EP-A-1 792 785, par exemple, divulgue un dispositif de butée du type précité. La mobilité linéaire de la butée par rapport à l'amortisseur permet de modifier la pression exercée sur l'amortisseur lors de l'accostage du véhicule contre le quai.

La butée comprend un corps de révolution avec une surface de révolution bombée. Grâce au corps de révolution, la butée peut rouler le long de la surface verticale du quai lors d'un chargement ou déchargement du véhicule et assurer un contact permanent entre le véhicule et le quai. La surface bombée permet un accostage de la butée contre le quai si la face arrière du véhicule est orientée parallèlement à la surface verticale du quai, mais également si l'angle entre la face arrière du véhicule et la surface verticale est, dans une certaine limite, différent de 0°. Si cet angle est différent de 0 °, le corps de révolution n'entrera pas en contact avec la surface verticale au niveau de son diamètre maximal, mais en un emplacement différent de sa longueur.

Toutefois, indépendamment de l'orientation de la face arrière du véhicule par rapport à la surface verticale du quai, la butée n'entre en contact avec la surface verticale que par un point.

La présente invention a pour but d'améliorer le contact entre le véhicule et le quai lors d'un chargement ou déchargement du véhicule, tout en maintenant une flexibilité d'orientation angulaire de la butée lors de l'accostage.

A cet effet l'invention a pour objet un dispositif de butée du type précité caractérisé par la partie caractérisante de la revendication 1.

Des modes de réalisation de l'invention sont décrits dans les revendications 2 à 9.

L'invention a en outre pour objet un véhicule automobile, du type poids lourd, comprenant un dispositif de butée tel que défini ci-dessus.

L'invention sera mieux comprise à la lecture de la description qui va suivre, donnée uniquement à titre d'exemple et faite en se référant aux dessins annexés, sur lesquels :
- la figure 1 est une vue schématique en perspective d'un dispositif de butée selon l'invention ;
- la figure 2 est une vue éclatée d'un ensemble de butée du dispositif de butée de la figure 1 ;
- la figure 3 est une vue schématique de dessus de l'ensemble de butée de la figure 1 au début d'un accostage droit contre une surface verticale ;
- la figure 4 est une vue analogue à la figure 3 en fin d'accostage ;
- la figure 5 est une vue analogue à la figure 3 au début d'un accostage en biais contre une surface verticale ;
- la figure 6 est une vue analogue à la figure 5 en cours d'accostage ;
- la figure 7 est une vue analogue à la figure 5 en fin d'accostage.

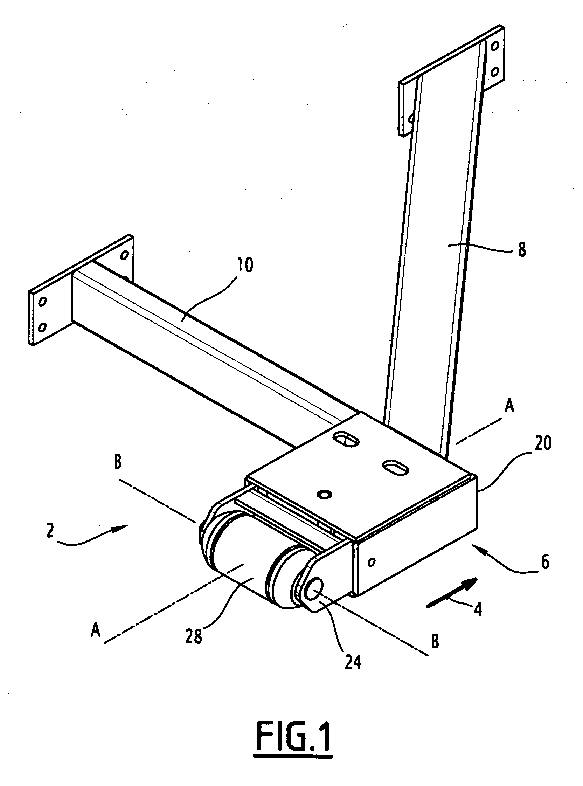

Sur la figure 1 est représenté un dispositif de butée selon l'invention désigné par la référence 2. Le dispositif de butée 2 s'étend dans un plan horizontal qui comprend l'axe longitudinal A-A et l'axe transversal B-B. La flèche 4 est parallèle à l'axe A-A et montre le sens avant du dispositif de butée 2.

Dans la description qui va suivre, les expressions « avant » et « arrière » se réfèrent toujours au sens de la flèche 4.

Le dispositif de butée 2 comprend un ensemble de butée 6, une jambe d'appui 8 et un arc-boutant 10. La jambe 8 et l'arc-boutant 10 sont des éléments de châssis, c'est-à-dire qu'ils sont solidaires de la partie arrière du châssis d'un camion.

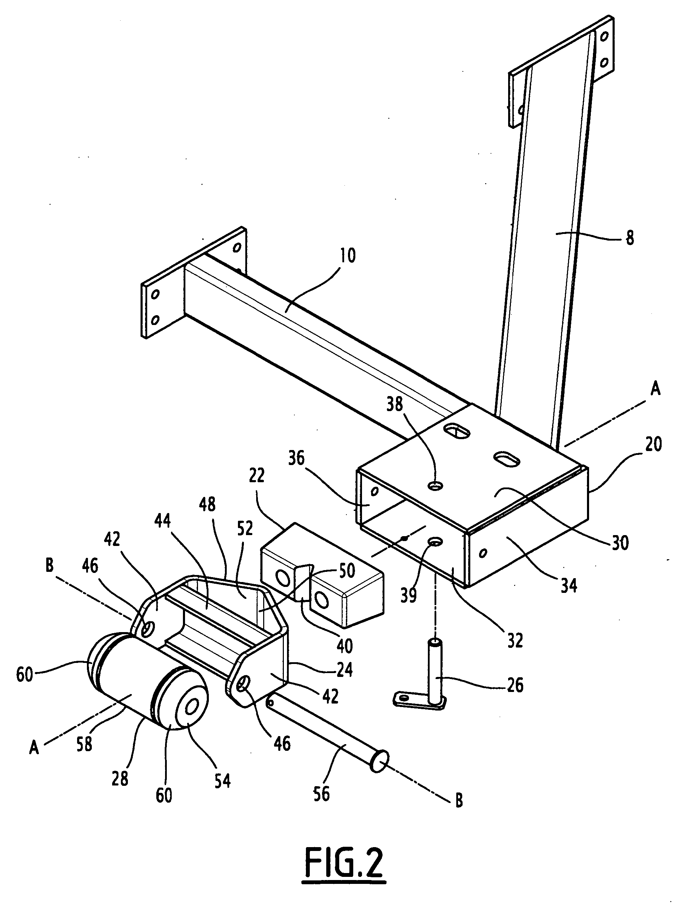

Sur la figure 2 est représenté en vue éclatée l'ensemble de butée 6.

L'ensemble de butée 6 comprend un organe de guidage 20, un amortisseur 22, un support de butée 24, un organe de butée vertical 26 et une butée 28.

L'organe de guidage 20 est un caisson parallélépipédique qui comprend deux faces rectangulaires horizontales 30, 32, deux faces rectangulaires latérales 34, 36 et une ouverture avant et une ouverture arrière. L'ouverture avant du caisson est fermée par l'extrémité extérieure de l'arc boutant 10. Le caisson est ouvert vers l'arrière. L'organe de guidage 20 et l'arc boutant 10 sont solidairement fixés l'un à l'autre, par exemple au moyen de boulons (non représentés sur la figure 2).

Les faces horizontales 30, 32 comportent des trous 38 et 39, respectivement. Les trous 38 et 39 sont agencés coaxialement suivant un axe s'étendant verticalement.

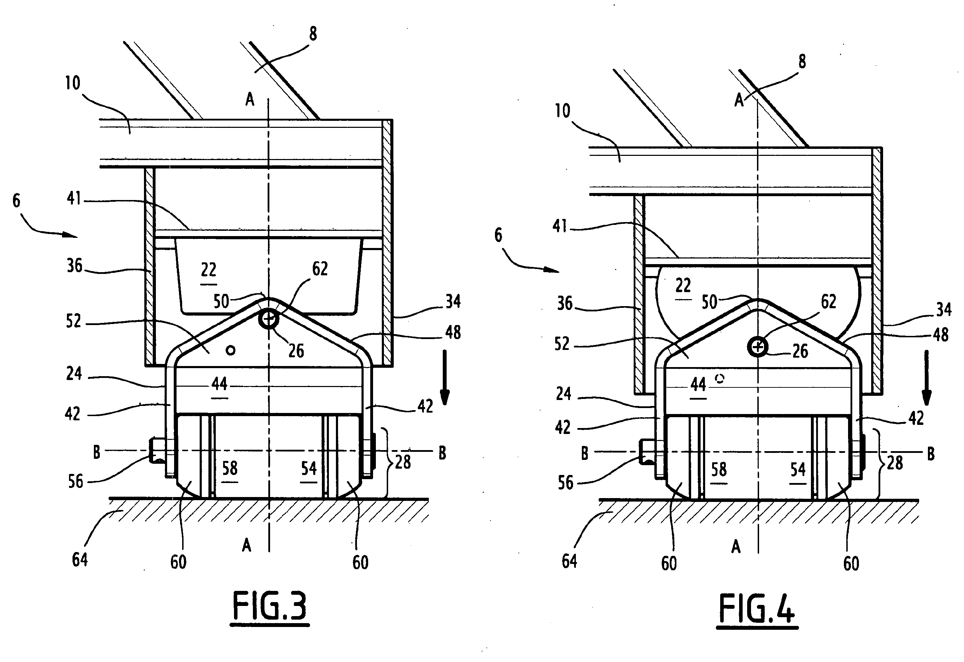

L'amortisseur 22 est en élastomère et a sensiblement la forme d'un parallélépipède rectangle. La face arrière de l'amortisseur 22 présente une entaille centrale 40 en forme de V qui s'étend verticalement sur toute la longueur de l'amortisseur 22. Comme représenté sur la figure 3, l'amortisseur 22 est placé dans l'organe de guidage 20 de sorte qu'il vient avec sa face avant en appui contre un organe d'appui 41 étant en appui sur l'extrémité de l'arc boutant 10 qui est située à l'intérieur de l'organe de guidage 20.

Le support de butée 24 est réalisé à partir d'une tôle pliée. II comprend deux bras 42 s'étendant sensiblement suivant deux plans verticaux parallèles à l'axe A-A. Le support de butée 24 comprend également un élément de rigidification 44 monté transversalement entre lesdits bras 42 de manière à maintenir entre eux un écartement transversal sensiblement constant. Dans une partie arrière, chaque bras 42 présente un trou 46. Les deux trous 46 des deux bras 42 sont coaxiaux autour d'un axe B-B transversal. Les extrémités avant des deux bras 42 sont reliées par une partie d'appui avant 48 en forme de V, avec une pointe 50 qui est orientée vers l'avant. La partie avant du support de butée 24 définit ainsi une lumière verticale 52.

La butée 28 comprend un corps de révolution 54 qui tourillonne sur un boulon transversal 56. Le corps 54 comprend une surface d'accostage qui comporte une partie centrale 58 de forme cylindrique. Cette partie centrale 58 se prolonge en deux parties d'extrémité 60 tronconiques dont le rayon décroît à partir de la partie centrale 58. Le boulon 56 est maintenu par ses extrémités dans les trous 46 du support de butée 24, de sorte que le corps de révolution 54 peut tourner librement autour de son axe de révolution B-B.

La figure 3 montre que le support de butée 24 est reçu en partie dans l'organe de guidage 20. La partie arrière du support de butée 24 portant la butée 28 fait saillie vers l'arrière par l'ouverture arrière de l'organe de guidage 20, et la partie d'appui avant 48 du support de butée 24, située à l'intérieur de l'organe de guidage 20, vient en appui contre la face arrière de l'amortisseur 22 par la pointe 50 du V, laquelle est reçue dans l'entaille centrale 40. Pour éviter que le support de butée 24 puisse sortir de l'organe de guidage 20, l'organe de butée vertical 26 traverse les trous 38 et 39 des faces horizontales 30 et 32, respectivement, et la lumière verticale 52 du support de butée 24. L'organe de butée vertical 26 est une goupille amovible qui est solidairement fixée à l'organe de guidage 20.

Grâce au fait que la partie d'appui 48 est en forme de V, le support de butée 24 peut tourner autour d'un axe vertical 62 défini par l'organe de butée vertical 26, l'angle de rotation étant limité par les faces latérales 34, 36 de l'organe de guidage 20. La distance entre les deux faces latérales 34 et 36 est choisie par rapport à la largeur de l'extrémité arrière du support de butée 24 de façon que le support de butée 24 ait un jeu latéral suffisamment large pour permettre une rotation autour de l'organe de butée vertical 26 d'environ 5° à 10° dans chaque sens.

L'élasticité de l'amortisseur 22 fait que, sous l'action d'une force sensiblement longitudinale, le support de butée 24 est mobile en coulissement par rapport à l'organe de guidage 20 suivant l'axe A-A passant par l'organe de butée 26.

Si aucune force n'est exercée sur la butée 28 (figure 3), le support de butée 24 est dans une position sortie de repos. La partie d'appui 48 est en contact avec l'amortisseur 22 et comprime légèrement celui-ci, de sorte que l'amortisseur 22 maintient l'intérieur de la pointe 50 du V pressé contre l'organe de butée 26. Dans cette position sortie, le support de butée 24 peut tourner autour de l'axe 62 de l'organe 26.

L'utilisation du dispositif de butée 2 sera illustrée à l'aide d'un exemple et en se référant aux figures 3 à 7. Dans cet exemple, deux dispositifs de butée 2 sont montés à l'arrière du châssis d'un camion, près des extrémités latérales de celui-ci. Ce camion est en train de reculer dans le sens de la flèche représentée dans les figures 3 à 7. La flèche des figures 3 à 7 est orientée dans le sens opposé de la flèche 4 de la figure 1 et perpendiculairement à la face arrière du camion. En reculant, le camion s'approche d'une surface verticale 64, par exemple d'un quai de chargement et de déchargement.

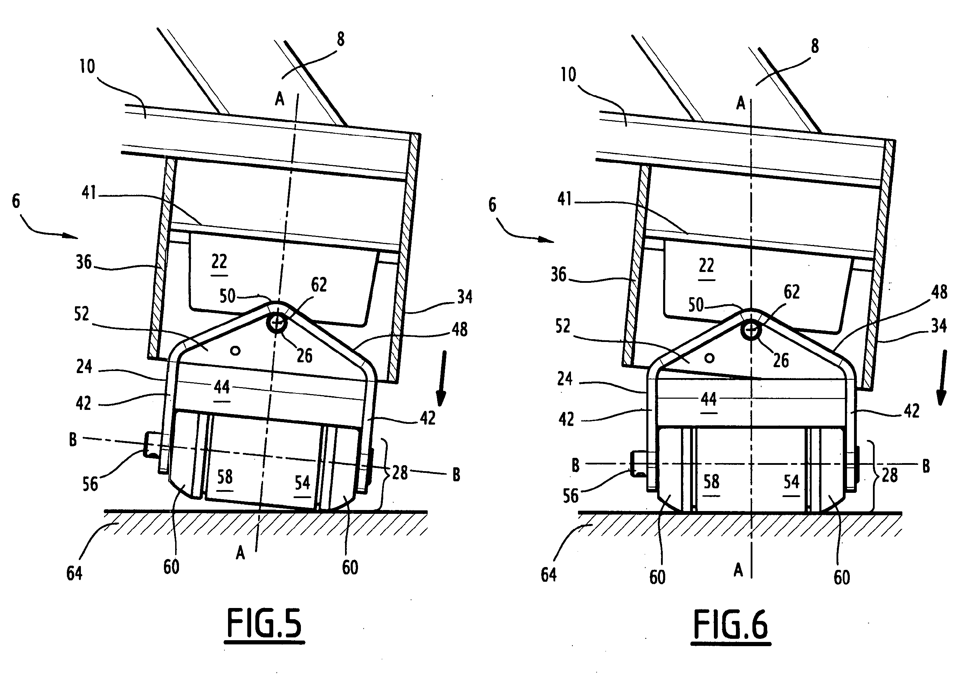

Deux situations sont à distinguer : (1) la face arrière du camion est orientée parallèlement à la surface verticale 64 (figures 3 et 4) ou (II) la face arrière du camion et la surface 64 forment un angle entre elles (figures 5 à 7).

Si la face arrière du camion est orientée parallèlement à la surface 64, les corps de révolution 54 de chaque butée 28 forment un axe qui est parallèle à la surface 64. En reculant, les deux corps de révolution 54 viennent en contact simultanément avec la surface verticale 64, et ceci sur toute la longueur de leur partie centrale cylindrique 58, suivant une génératrice de celle-ci (figure 3).

Si le camion continue de reculer (figure 4), la pointe 50 de la partie d'appui 48 du support de butée 24 s'enfonce dans l'amortisseur 22, et l'amortisseur 22 absorbe progressivement une partie de la force antagoniste résultant de l'accostage du véhicule contre la surface 64. L'ensemble de butée 6 est en position enfoncée de fin d'accostage. Le support 24 n'est plus en contact avec l'organe de butée 26.

Néanmoins, une telle situation est très rare. Dans la plupart des cas, le véhicule automobile est manoeuvré de sorte que l'axe formé par les deux corps de révolution 54 forme un angle avec la surface verticale 64. Par conséquent, au début de l'accostage, un seul des deux corps de révolution 54 vient en contact avec la surface 64.

La figure 5 représente la situation (11) au début de l'accostage de la butée 28 contre la surface verticale 64 d'un quai. Au début de l'accostage, un premier contact se fait entre une des deux parties d'extrémité 60 d'un corps de révolution 54 et la surface 64. A ce stade, l'ensemble de butée 6 est en position sortie de repos et aucune force substantielle n'est exercée par le support de butée 24 sur l'amortisseur 22.

Si le camion continue de reculer (figure 6), le premier contact entre la butée 28 et la surface 64 fait qu'une force antagoniste est exercée sur la butée 28 et par conséquent sur le support de butée 24, ce qui permet au support de butée 24 de tourner autour de l'organe de butée vertical 26. Donc, le support de butée 24 tourne ensemble avec la butée 28, de sorte que l'axe B-B du corps de révolution 54 s'oriente parallèlement à la surface 64. Le contact entre le corps de révolution 54 et la surface 64 se fait maintenant sur toute la longueur de la partie centrale 58 cylindrique, le long d'une génératrice de celle-ci.

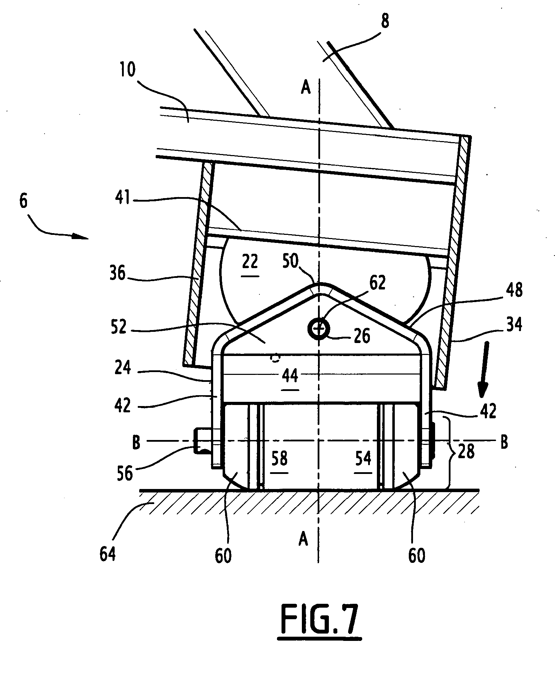

Si le camion continue de reculer (figure 7), la pointe 50 de la partie d'appui 48 du support de butée 24 s'enfonce dans l'amortisseur 22, et l'amortisseur 22 absorbe progressivement une partie de la force antagoniste résultant de l'accostage du véhicule contre la surface 64. L'ensemble de butée 6 est en position enfoncée de fin d'accostage. Le support 24 n'est plus en contact avec l'organe de butée 26.

Bien entendu, les mêmes phénomènes se produisent, avec un décalage dans le temps, pour l'autre butée 28.

Dans un autre mode de réalisation, la butée 28 comprend plusieurs corps de révolution 54 agencés de telle sorte que leurs axes de révolution sont parallèles entre eux et superposés.

La présente invention présente une combinaison d'avantages. D'une part, le dispositif de butée 2 est adapté pour mettre en contact le véhicule automobile et la surface verticale 64 du quai de chargement et déchargement, même si la face arrière du véhicule automobile n'est pas parallèle à la surface 64, ce qui est le cas pour la plupart des manoeuvres d'accostage.

D'autre part, le dispositif de butée 2 est adapté pour mettre en contact le véhicule automobile et la surface verticale 64 suivant deux lignes de contact, soit sur une plus grande zone d'accostage que les dispositifs de butée connus, ce qui augmente la sécurité lors du chargement ou déchargement du véhicule et la durabilité de l'équipement.

En outre, le dispositif de butée 2 assure le contact entre le véhicule et la surface verticale 64 pendant tout son chargement ou déchargement, les butées 28 étant adaptées pour suivre le mouvement vertical correspondant du véhicule.

En variante, les corps de révolution 54 peuvent avoir une forme bombée sensiblement ellipsoïdale.

## Revendications

1. Dispositif de butée (2) de véhicule automobile, du type comprenant :
- au moins un élément de châssis (8, 10) ;
- une butée (28) comprenant une surface d'accostage contre une surface verticale (64) d'un quai de chargement et de déchargement du véhicule, et faisant saillie vers l'extérieur par rapport aux éléments de châssis (8, 10) ;
- un support de butée (24) portant sur une extrémité la butée (28) et mobile en coulissement suivant un axe sensiblement horizontal par rapport aux éléments de châssis (8, 10), entre une position sortie de repos et une position enfoncée de fin d'accostage ;
- un organe de guidage (20) en coulissement dans lequel le support de butée (24) est reçu coulissant entre ses positions sortie de repos et enfoncée de fin d'accostage ; et
- un amortisseur (22) en appui sur un des éléments de châssis (10), le support de butée (24) étant en appui précontraint sur l'amortisseur (22),
**caractérisé en ce que** le support de butée (24) est reçu avec un jeu latéral dans l'organe de guidage (20) et est, au moins dans la position sortie de repos, mobile en rotation suivant un axe vertical (62) par rapport à l'amortisseur (22), le coulissement du support de butée (24) étant indépendant de la rotation du support de butée (24) autour de l'axe vertical (62) par rapport à l'amortisseur (22).

2. Dispositif de butée (2) selon la revendication 1, **caractérisé en ce que** la butée (28) comprend un corps de révolution (54) ayant un axe de révolution (B-B) sensiblement horizontal et en rotation suivant cet axe de révolution sur le support de butée (24).

3. Dispositif de butée (2) selon la revendication 2, **caractérisé en ce que** le corps de révolution (54) comprend une partie centrale (58) de forme cylindrique.

4. Dispositif de butée (2) selon la revendication 3, **caractérisé en ce que** le corps de révolution (54) comprend au moins une partie d'extrémité (60) de rayon décroissant à partir de la partie centrale (58).

5. Dispositif de butée (2) selon l'une quelconque des revendications 1 à 4, **caractérisé en ce que** l'extrémité du support de butée (24) située à l'opposé de l'extrémité portant la butée (28) présente une largeur inférieure à celle de l'extrémité portant la butée (28), de sorte que, conjointement avec le jeu latéral du support de butée (24) dans l'organe de guidage (20), le support de butée (24) est mobile en rotation suivant ledit axe vertical (62) par rapport à l'amortisseur (22), l'extrémité de largeur inférieure étant reçue avec précontrainte dans une entaille (40) de l'amortisseur (22).

6. Dispositif de butée (2) selon la revendication 5, **caractérisé en ce que** l'extrémité du support de butée (24) située à l'opposé de l'extrémité portant la butée (28) a une forme en V, la pointe (50) du V étant en appui précontraint sur l'amortisseur (22).

7. Dispositif de butée (2) selon l'une quelconque des revendications 1 à 6, **caractérisé en ce que** l'organe de guidage (20) est traversé par un organe de butée vertical (26), **en ce que** l'extrémité du support de butée (24) située à l'opposé de l'extrémité portant la butée (28) comporte une lumière verticale (52) traversée par cet organe de butée vertical (26), et **en ce que**, en position sortie de repos, l'extrémité du support de butée (24) située à l'opposé de l'extrémité portant la butée (28) est pressée sur l'amortisseur (22) contre l'organe de butée vertical (26).

8. Dispositif de butée (2) selon la revendication 7, caractérisé end ce que ledit organe de butée vertical (26) est une goupille amovible.

9. Dispositif de butée (2) selon l'une quelconque des revendications 1 à 8, **caractérisé en ce que** l'amortisseur (22) est en matière adaptée pour se déformer élastiquement, notamment un élastomère.

10. Véhicule automobile, du type poids lourd, comprenant un dispositif de butée (2) selon l'une quelconque des revendications précédentes.

## Patentansprüche

1. Ansetzvorrichtung (2) eines Automobils, umfassend:
- mindestens ein Fahrwerkelement (8, 10);
- einen Anschlag (28), umfassend eine Andockfläche für eine vertikale Fläche (64) einer Lade- bzw. Entladeplattform des Fahrzeugs, die nach außen über die Fahrwerkelemente (8, 10) hinausragt;
- eine Anschlagstüze (24) an einem Ende des Anschlags (28), die zwischen einer ausgefahrenen Ruheposition und einer angedockten Position entlang einer relativ zu den Fahrwerkelementen (8, 10) im Wesentlichen horizontalen Achse gleitbar ist;
- ein gleitbares Führungselement (20), in das die zwischen der ausgefahrenen und angedockten position gleitende Anschlagstütze (24) aufgenommen wird; und
- einen auf eines der Fahrwerkelemente (10) abgestützen Stoßdämpfer (22), wobei die Anschlagstütze (24) auf dem Stoßdämpfer (22) vorgespannt ist,
**dadurch gekennzeichnet, dass** die Anschlagstütze (24) mit seitlichem Spiel in das Führungselement (20) aufgenommen wird und mindestens in der ausgefahrenen Ruheposition um eine vertikale Achse (62) relativ zum Stoßdämpfer (22) drehbar ist, wobei die gleitende Verschiebung der Anschlagstütze (24) unabhängig von der Drehung der Anschlagstütze (24) um die vertikale Achse (62) relativ zum Stoßdämpfer (22) ist.

2. Ansetzvorrichtung (2) nach Anspruch 1, **dadurch gekennzeichnet, dass** der Anschlag (28) ein Drehelement (54) umfasst, das eine im Wesentlichen horizontale Drehachse (B-B) aufweist und sich um diese Drehachse auf der Anschlagstütze (24) dreht.

3. Ansetzvorrichtung (2) nach Anspruch 2, **dadurch gekennzeichnet, dass** das Drehelement (54) ein der Form nach zylindrisches Mittelteil (58) umfasst.

4. Ansetzvorrichtung (2) anch Anspruch 3, **dadurch gekennzeichnet, dass** das Drehelement (54) mindestens ein sich ab dem Mittelteil (58) im Radius verkleinerndes Endteil (60) umfasst.

5. Ansetzvorrichtung (2) nach einem der Ansprüche 1-4, **dadurch gekennzeichnet, dass** das gegenüber dem den Anschlag (28) tragenden Ende angeordnete Ende der Anschlagstütze (24) eine kleinere Länge aufweist als die des Endes, das den Anschlag (28) trägt, so dass die Anschlagstütze (24) im Zusammenwirken mit dem seitlichen Spiel der Anschlagstütze (24) im Führungselement (20) um die vertikale Achse (62) relativ zum Stoßdämpfer (22) drehbar ist, wobei das kürzere Ende mit Vorspannung in eine Kerbe (40) des Stoßdämpfers (22) aufgenommen wird.

6. Ansetzvorrichtung (2) nach Anspruch 5, **dadurch gekennzeichnet, dass** das gegenüber dem den Anschlag (28) tragenden Ende angeordnete Ende der Anschlagstütze (24) V-förmig ist, wobei die Spitze des V mit Vorspannung auf den Stoßdämpfer (22) abgestützt wird.

7. Ansetzvorrichtung (2) nach einem der Ansprüche 1 bis 6, **dadurch gekennzeichnet, dass** das Führungselement (20) von einem vertikalen Anschlagelement (26) durchquert wird, dass das gegenüber dem den Anschlag (28) tragende Ende angeordnete Ende der Anschlagstütze (24) ein vom vertikalen Anschlagelement (26) durchquertes vertikales Licht (52) aufweist, und dass das gegenüber dem den Anschlag (28) tragenden Ende angeordnete Ende der Anschlagstütze (24) gegen das vertikale Anschlagelement (26) auf den Stoßdämpfer (22) gerückt wird.

8. Ansetzvorrichtung (2) nach Anspruch 7, **dadurch gekennzeichnet, dass** das vertikale Anschlagelement (26) ein beweglicher Stift ist.

9. Ansetzvorrichtung (2) nach einem der Ansprüche 1 bis 8, **dadurch gekennzeichnet, dass** der Stoßdämpfer (22) aus einem elastisch verformbaren Material, insbesondere einem Elastomeren, besteht.

10. Schwerlastfahrzeug, umfassend eine Ansetzvorrichtung (2) nach einem der vorstehenden Ansprüche.

## Claims

1. A stop device (2) for a motor vehicle, of the type comprising:
- at least one chassis element (8, 10);
- a stop (28) comprising a contact surface against a vertical surface (64) of a loading and unloading dock for the vehicle, and protruding outward with respect to the chassis elements (8, 10);
- a stop support (24) bearing the stop (28) on one end and slidable along a substantially horizontal axis with respect to the chassis elements (8, 10), between an idle extended position and an end-of-contact retracted position;
- a slide guiding member (20) in which the stop support (24) is slidingly received between its idle extended and end-of-contact retracted positions; and
- a damper (22) bearing on one of the chassis elements (10), the stop support (24) being pre-stressed to bear on the damper (22),
**characterized in that** the stop support (24) is received with lateral play in the guide member (20) and is, at least in the idle extended position, rotatable along a vertical axis (62) with respect to the damper (22), the sliding of the stop support (24) being independent from the rotation of the stop support (24) around the vertical axis (62) with respect to the damper (22).

2. The stop device (2) according to claim 1, **characterized in that** the stop (28) comprises a body of revolution (54) having a substantially horizontal axis of revolution (B-B) and rotating along the axis of revolution on the stop support (24).

3. The stop device (2) according to claim 2, **characterized in that** the body of revolution (54) comprises a cylindrical central portion (58).

4. The stop device (2) according to claim 3, **characterized in that** the body of revolution (54) comprises at least one end portion (60) with a radius decreasing from the central portion (58).

5. The stop device (2) according to any one of claims 1 to 4, **characterized in that** the end of the stop support (24) situated across from the end bearing the stop (28) has a width smaller than that of the end supporting the stop (28), such that, jointly with the lateral play of the stop support (24) in the guide member (20), the stop support (24) is rotatable along said vertical axis (62) with respect to the damper (22), the end with the smaller width being received pre-stressed in a notch (40) of the damper (22).

6. The stop device (2) according to claim 5, **characterized in that** the end of the stop support (24) situated across from the end bearing the stop (28) is in the shape of a V, the tip (50) of the V bearing pre-stressed on the damper (22).

7. The stop device (2) according to any one of claims 1 to 6, **characterized in that** the guide member (20) is passed through by a vertical stop member (26), **in that** the end of the stop support (24) situated across from the end bearing the stop (28) includes a vertical opening (52) passed through by said vertical stop member (26), and **in that**, in the idle extended position, the end of the stop support (24) situated across from the end supporting the stop (28) is pressed on the damper (22) against the vertical stop member (26).

8. The stop device (2) according to claim 7, **characterized in that** said vertical stop member (26) is a removable pin.

9. The stop device (2) according to any one of claims 1 to 8, **characterized in that** the damper (22) is made from a material capable of deforming elastically, in particular an elastomer.

10. A motor vehicle, of the heavy truck type, comprising a stop device (2) according to any one of the preceding claims.
